# EUROPEAN PATENT APPLICATION

(11) **EP 2 755 052 A1**
(43) Date of publication of application: **16.07.2014**
(21) Application number: 13150854.1
(22) Date of filing: 10.01.2013
(51) Int. Cl.: G01T 1/29

(54) **Device for monitoring an electron beam via bremsstrahlung imaging**

(71) Applicant: Tetra Laval Holdings & Finance S.A., 1009 Pully (CH)
(72) Inventor: Hallstadius, Hans, 226 47 Lund (SE); Hansen, Fredrik, 237 36 BJÄRRED (SE); Mellbin, Håkan, 242 96 HÖRBY (SE); Cloetta, Dominique, 1752 Villars-sur-Glâne (CH)
(74) Representative: Tetra Pak - Patent Attorneys SE

(57) **Abstract**

The present invention relates to a sensor device (56) for measuring at least one dose control parameter of an electron beam (16) emitted an electron exit window (20) of an electron beam emitter (10). Said sensor device (56) comprises a plate (74) adapted to generate x-rays (76) when hit by electrons (e⁻) of said electron beam (16), and at least one x-ray imaging sensor (70) adapted to detect the generated x-rays (76). The invention also relates to a method.

## Description

### FIELD OF THE INVENTION

The present invention relates to a device and method for irradiating packaging containers with electron beams in a filling machine.

### BACKGROUND OF THE INVENTION

Within the food industry, it is common practice to pack liquid and partly liquid food products in packaging containers manufactured from a packaging laminate comprising a core layer of paper or paperboard and one or more barrier layers of, for example, polymer material or aluminium foil.

An increasingly common packaging type is the "carton bottle" manufactured in a filling machine in that packaging blanks of the above-described packaging laminate are formed and sealed as a sleeve. Said sleeve is closed in one end in that a top of thermoplastic material is injection moulded directly on the sleeve end portion. The sheets of packaging laminate may be cut from a magazine reel of packaging laminate.

When the top is finished the packaging container is ready to be filled with product through the still open bottom, and then sealed and finally folded. Before the filling operation the packaging container undergoes treatment. If distribution and storage is to be made in chilled temperature the packaging container is disinfected, whereas if distribution and storage is to be made in ambient temperature, the packaging container needs to be sterilized. A conventional way of sterilizing a ready-to-fill packaging container is to use hydrogen peroxide, preferably in gas phase.

Another way to sterilize such packaging containers is to irradiate it by means of a low voltage electron beam emitted from an electron beam emitter. An example of linear irradiation by electron beam of ready-to-fill packaging containers is disclosed in the international patent publication WO 2005/002973. The electron beam emitter is cylindrical with an electron exit window positioned at one of the distal ends. The packaging container is lifted to surround the electron beam emitter during the sterilization cycle. Other examples of irradiation of packaging containers, in these cases PET bottles, are described in for example WO 2011/011079 and EP 2 371 397, the latter describing a rotary system. In these systems emitters are used having a diameter small enough to be passed through a neck portion of the bottles.

In order to monitor correct operation of the electron beam emitters, and thereby being able to secure sterility assurance level, it is common practise to perform dosimetry tests. These tests are made regularly, generally daily, throughout the lifetime of the electron beam emitter. In general, dosimetry tests involve adding a dosimeter means, i.e. a patch reacting on radiation exposure, to a packaging container to measure if a correct absorbed dose is obtained during radiation. At the same time measurements of voltage and current are made in the electron beam emitter. The current over the filament is measured. By comparing the current fed to the filament and current leaving the filament it is possible to determine the amount of electrons emitted from the filament. In addition, the voltage, i.e. the electric potential, between the electron exit window and the filament is measured. The measured value of voltage and current is then used as a set value during production of packaging containers. The current and voltage are continuously monitored during production, and as long as the value is not lower than the set value it is assumed that the packaging containers receive the correct dose.

### SUMMARY OF THE INVENTION

An object of the invention is to provide an irradiation device in which on-line measurement and control of the functionality of the electron beam emitter is improved. Said object is achieved by providing an irradiation device for irradiating packaging containers with electron beams in a filling machine. Said irradiation device comprising at least one electron beam emitter having an electron exit window and at least one sensor device for measuring at least one dose control parameter of the electron beam. Further, it comprises a first position and a second position. Said electron beam emitter is adapted to be movable from the first position to the second position, and from the second position to first position. Further, said electron beam emitter is adapted to be at least temporarily engaged with a packaging container for irradiating said packaging container, between the first position and the second position, and at least temporarily positioned with the electron exit window substantially in line with the sensor device, between the second position and the first position, for allowing the sensor device to measure at least one dose control parameter of the electron beam of said electron beam emitter.

In one or more embodiments said dose control parameter is dose rate (kGy/s).

In one or more embodiments the sensor device is connected to an electron beam dose processing module adapted to process information from the sensor device and at least provide a feedback signal to a filling machine control module if any dose control parameter is not within an acceptable, pre-set dose control parameter range.

In one or more further embodiments the sensor device or the electron beam dose processing module is able to generate a 2D image or 2D matrix of the dose control parameters, and wherein either the sensor device or the electron beam dose processing module comprises digital image processing means or matrix processing means able to compare the generated 2D image or 2D matrix with a pre-set 2D image or matrix for the purpose of detecting unacceptable discrepancies.

Furthermore, in one or more embodiments the electron beam dose processing module is connected to an electron beam emitter control module, which electron beam emitter control module is adapted to adjust voltage and current being fed to the electron beam emitter based on the dose control parameters measured by the sensor device and/or the pre-set dose control parameters.

In one or more embodiments the emitter control module is connected to means for measuring the current over a filament of the electron beam emitter and the voltage between the electron exit window and said filament.

In one or more embodiments said electron beam emitter is being arranged on a rotatable carrier, and the carrier is adapted to let the electron beam emitter pass a packaging container in-feed position and a packaging container out-feed position.

In one or more embodiment the irradiation device comprises packaging container conveying means being adapted to convey the packaging container from the infeed position to the outfeed position synchronously with the rotation of the carrier and aligned with the electron beam emitter.

In one or more embodiments the packaging container conveying means being further adapted to displace the packaging container in relation to the electron beam emitter between a first position in which the packaging container and the electron beam emitter are not engaged with each other and a second position in which the packaging container and the electron beam emitter are fully engaged with each other.

In one or more embodiments the irradiation device comprises more than one electron beam emitter.

In one or more further embodiments the sensor device is arranged stationary therein.

In more or more even further embodiments the sensor device and the electron beam emitter are arranged such that when the electron beam emitter and the sensor device are in line with each other a distance in the range of 1-10 mm is formed between the electron exit window and a sensor surface facing the electron exit window.

In one or more embodiments the sensor device comprises a first and a second sensor surface being arranged on two different levels in relation to the electron exit window of the electron beam emitter.

The invention relates to an irradiation device for sterilizing packaging containers with electron beams in a filling machine, said irradiation device comprising at least one electron beam emitter having an electron exit window, at least one sensor device for measuring at least one dose control parameter of the electron beam, wherein said electron beam emitter is adapted to sterilize the packaging container during a sterilization cycle, and wherein the electron beam emitter is at least temporarily positioned with the electron exit window substantially in line with the sensor device in between subsequent sterilization cycles.

The invention relates to an irradiation device for sterilizing packaging containers with electron beams in a filling machine, said irradiation device comprising at least one electron beam emitter having an electron exit window, at least one sensor device for measuring at least one dose control parameter of the electron beam. The electron beam emitter is adapted to be transported simultaneously with the packaging container from a first position to a second position, during which transport the electron beam emitter sterilizes the packaging container. The electron beam emitter is further transported from the second position to the first position, during which transport said electron beam emitter is at least temporarily positioned with the electron exit window substantially in line with the sensor device, for allowing the sensor device to measure at least one dose control parameter of the electron beam of said electron beam emitter.

The invention relates to an irradiation device for irradiating packaging containers with electron beams in a filling machine. Said irradiation device comprising at least one electron beam emitter having an electron exit window and at least one sensor device for measuring at least one dose control parameter of the electron beam. Further, it comprises a packaging container in-feed position and a packaging container out-feed position. Said electron beam emitter is adapted to be movable from the packaging container in-feed position to the packaging container out-feed position, and from the packaging container out-feed position back to the packaging container in-feed position. Further, said electron beam emitter is adapted to be at least temporarily engaged with a packaging container for irradiating said packaging container, between the packaging container in-feed position and the packaging container out-feed position, and at least temporarily positioned with the electron exit window substantially in line with the sensor device, between the packaging container out-feed position and the packaging container in-feed position, for allowing the sensor device to measure at least one dose control parameter of the electron beam of said electron beam emitter in between packaging container irradiation cycles.

The invention also relates to a method for irradiating packaging containers with electron beams in a filling machine, by providing at least one electron beam emitter having an electron exit window, providing at least one sensor device for measuring at least one dose control parameter of the electron beam, providing a first position and second position, wherein the method further comprises, moving said electron beam emitter from the first position to the second position, and from the second position to the first position, at least temporarily engaging said electron beam emitter with a packaging container for irradiating said packaging container, between the first position and the second position, and at least temporarily positioning the electron exit window substantially in line with the sensor device, between the second position and the first position, allowing the sensor device to measure at least one dose control parameter of the electron beam of said electron beam emitter.

The invention also relates to a method for irradiating packaging containers with electron beams in a filling machine. The method comprises the steps of providing at least one electron beam emitter having an electron exit window, providing at least one sensor device for measuring at least one dose control parameter of the electron beam, providing a packaging container in-feed position and a packaging container out-feed position. The method further comprises moving said electron beam emitter from the packaging container in-feed position to the packaging container out-feed position, and from the packaging container out-feed position back to the packaging container in-feed position. Further it comprises at least temporarily engaging said electron beam emitter with a packaging container for irradiating said packaging container, between the packaging container in-feed position and the packaging container out-feed position. Furthermore it comprises the step of at least temporarily positioning the electron exit window substantially in line with the sensor device, between the packaging container out-feed position and the packaging container in-feed position, for allowing the sensor device to measure at least one dose control parameter of the electron beam of said electron beam emitter in between packaging container irradiation cycles.

In one or more embodiments the method comprises the step of processing the information from the sensor device in an electron beam dose processing module, and at least sending a feedback signal to a filling machine control module if any dose control parameter is not within an acceptable, pre-set dose control parameter range.

In one or more further embodiments it comprises generating a 2D image or 2D matrix of the dose control parameters in the sensor device or the electron beam dose processing module, and comparing, using a digital image processing means or matrix processing means, the generated 2D image or 2D matrix with a pre-set 2D image or matrix for the purpose of detecting unacceptable discrepancies.

The invention also relates to a sensor device for measuring at least one dose control parameter of an electron beam emitted from an electron exit window of an electron beam emitter. The sensor device comprises a plate adapted to generate x-rays when hit by electrons of said electron beam, and at least one x-ray imaging sensor adapted to detect the generated x-rays.

In one or more embodiments the dose control parameter is dose rate (kGy/s).

In one or more embodiments the sensor device is connected to processing means for processing the information from the at least one x-ray imaging sensor and generate an image of the dose control parameter of the electron beam.

In one or more sensor device the at least one x-ray imaging sensor comprises a scintillator connected to an array of photomultipliers or photodiodes.

In or more embodiments the plate is made of a metallic material.

In one or more embodiments the electron exit window of the electron beam emitter is adapted to at least temporarily face said plate, and that the plate is arranged as a barrier between the electron exit window and the at least one x-ray imaging sensor, such that the electrons hit the plate.

In one or more embodiments the at least one x-ray imaging sensor is encapsulated in a box, said box having said plate as a lid.

In one or more embodiments the area of the plate is large enough to catch the entire cross section of the electron beam.

In one or more embodiments the thickness of the plate is large enough to prevent electrons e⁻ of the electron beam to pass through it.

The invention also relates to a method for measuring at least one dose control parameter of an electron beam of an electron beam emitter, Said method comprising forcing the electrons of the electron beam to hit a plate, which plate is adapted to generate x-rays when hit by electrons, and detecting the generated x-rays by at least one x-ray imaging sensor.

### BRIEF DESCRIPTION OF THE DRAWINGS

In the following, a presently preferred embodiment of the invention will be described in greater detail, with reference to the enclosed schematic drawings, in which:
Fig. 1 is a packaging container and an exemplary electron beam emitter in a fully engaged sterilization position,
Fig. 2a is a first embodiment of the invention,
Fig. 2b is a second embodiment being a modification of the first embodiment,
Fig. 3a is a perspective view of an irradiation device according to a third embodiment of the invention,
Fig. 3b is a view from above of the irradiation device of Fig. 3a,
Fig. 4 is a view of software modules,
Fig. 5 is plan views of two examples of electron beam shape and intensity,
Fig. 6 is an illustration showing general electron energy distribution curves, and
Fig. 7 is a sensor device according to a fourth embodiment of the invention.
Fig. 8 is a view of an electron beam emitter and a cross sectional view of an exemplary sensor device.

### DETAILED DESCRIPTION OF A PREFERRED EMBODIMENT

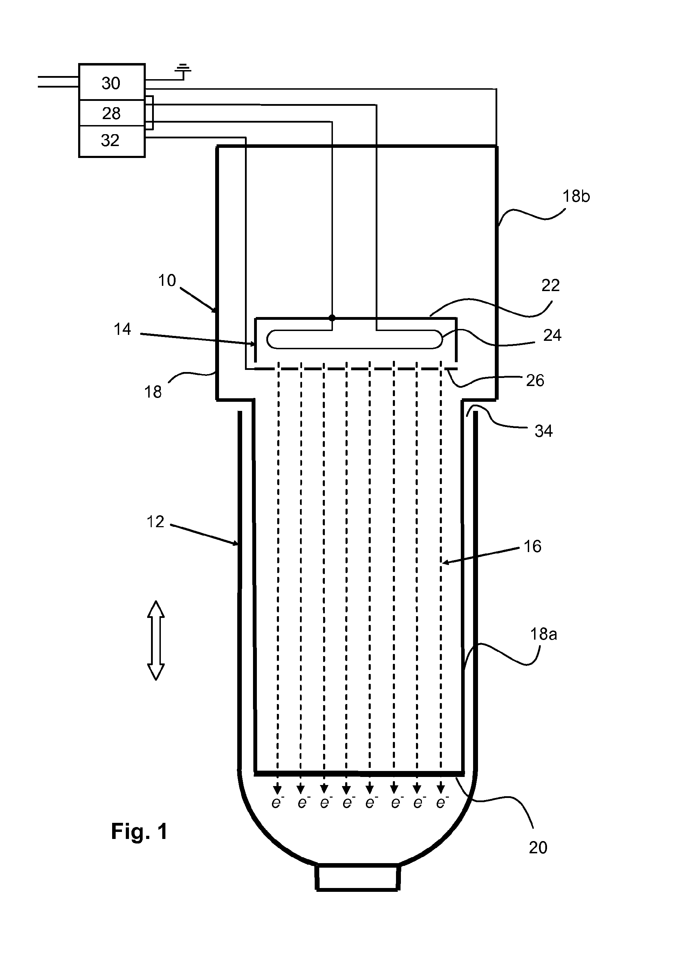

In the following, and with reference to Fig. 1, an exemplary electron beam emitter 10 for sterilizing ready-to-fill packaging containers 12 and the concept of electron beam sterilization will be briefly described.

The electron beam emitter 10 comprises an electron generator 14 for emitting a substantially circular electron beam 16. The electron generator 14 is enclosed in a hermetically sealed vacuum chamber 18. Said vacuum chamber 18 is provided with an electron exit window 20.

The electron generator 14 comprises a cathode housing 22 and a filament 24. Optionally, the electron generator 14 also comprises a control grid 26. In use, an electron beam 16 is generated by heating the filament 24. When an electrical current is fed through the filament 24, the electrical resistance of the filament 24 causes the filament to be heated to a temperature in the order of 2000°C. This heating causes the filament 24 to emit a cloud of electrons. The electrons are accelerated towards the electron exit window 20 by means of a high-voltage potential between the cathode housing 22 and the exit window 20 (being the anode). Further, the electrons pass through the electron exit window 20 and continue towards the target area, i.e. in this case the inside of the packaging container 12.

The high-voltage potential is created by for example connecting the cathode housing 22 and the filament 24 to a power supply 28 and by connecting the vacuum chamber to ground 30. The electron beam emitter 10 is generally denoted low voltage electron beam emitter if the voltage is below 300 kV. In the disclosed design the accelerating voltage is in the order of 95 kV. This voltage results in a kinetic (motive) energy of 95 keV in respect of each electron. By applying an electrical potential also to the control grid 26 the emission of electrons may be further controlled. If a separate and variable electrical potential is applied to the control grid 26 it makes it possible to use the control grid 26 for active shaping of the generated electron beam. For these purposes the control grid 26 may be electrically connected to a separate power supply 32.

The filament 24 can be made of tungsten. The grid 26, placed between the filament 24 and an electron beam exit window 20 provided with a number of openings and is used for diffusing the electron beam 16 into a more uniform beam, and for focusing the electron beam 16 towards the target area.

The emitter 10 is, as mentioned, further provided with an electron exit window 20. The window 20 is made of a metallic foil, such as for example titanium, and have a thickness in the order of 4-12 µm. A supporting net (not shown) formed of aluminum or copper supports the foil from inside the vacuum chamber 18. The electrons are exiting the vacuum chamber 18 through the exit window 20.

In this embodiment the vacuum chamber 18 is made up of two cylindrical bodies 18a, 18b with substantially cylindrical symmetry. An end of the first cylindrical body 18a is provided with the electron exit window 20. The diameter of said first body 18a is small enough to be inserted into the ready-to-fill packaging container 12, the cross section of said first body is dimensioned such that it can be guided through an opening 34 of the packaging container 12. The second body 18b is provided with the electron beam generator14, and the diameter of said second body 18b is larger than the first body 18a. The diameter of the emitted electron beam 16, while still inside the emitter 10, is smaller than the diameter of the first body 18a.

In Fig. 1 the opening 34 of the packaging container is an open bottom end, which after filling will be sealed and folded to form a substantially flat bottom surface. It should however be understood that the opening may in other embodiments be arranged in the top of the packaging container, constituting a neck or spout portion of the packaging container. Such neck or spout portion will, after filling, be sealed by for instance a screw cap.

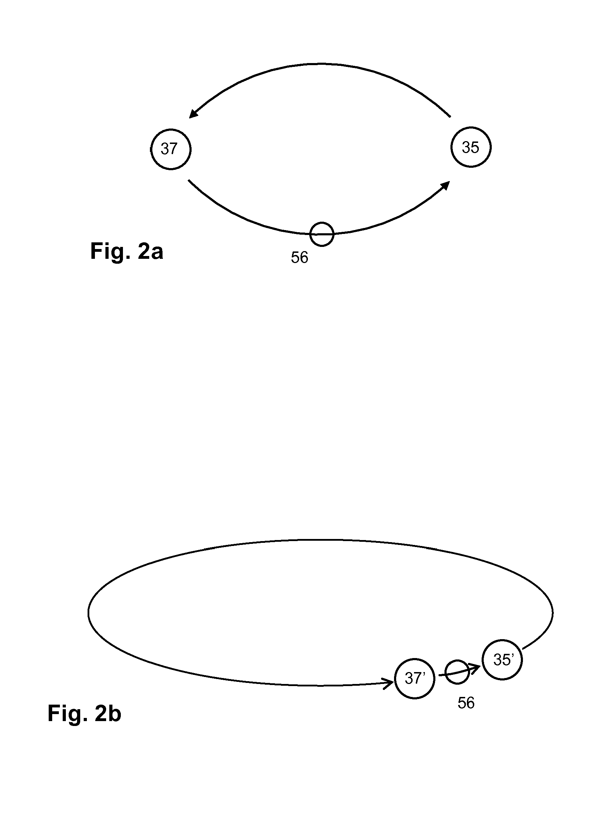

In Fig. 2a a first embodiment of the invention is shown, illustrating the general or conceptual idea of the invention. A packaging container is to be sterilized by an electron beam from an electron beam emitter in an irradiation device of a filling machine. In the irradiation device there is arranged at least one sensor device for measuring at least one dose control parameter of the electron beam. The electron beam emitter has an electron exit window and is adapted to be movable from a first position 35 to a second position 37, and from the second position 37 to the first position 35. The positions 35, 37 are illustrated by circles in the figure, and the movement of the electron beam emitter is illustrated by arrows. Between the first position 35 and the second position 37 said electron beam emitter is adapted to be at least temporarily engaged with a packaging container for irradiating said packaging container. Between the second position 37 and the first position 35, the electron beam emitter is at least temporarily positioned with the electron exit window substantially in line with a sensor device 56, for allowing the sensor device 56 to measure at least one dose control parameter of the electron beam of said electron beam emitter. The electron beam emitter is adapted to be transported simultaneously with the packaging container from the first position 35 to the second position 37, and the electron beam emitter sterilizes the packaging container during that transport. The electron beam emitter is then further transported from the second position 37 to the first position 35, and during that transport the electron beam emitter passes the sensor device 56. The electron beam emitter is in operation, i.e. emitting an electron beam, throughout the entire transport, i.e. from the first position 35 to the second position 37 and back to the first position 35. The electron beam device is of the type described in relation to Fig. 1, but could alternatively be of another type suitable for sterilizing packaging containers of the bottle-type. The first position 35 is where the packaging container is entered into engagement with the electron beam emitter, i.e. the packaging container is moved relative the electron beam emitter in a vertical direction so that the electron beam emitter is started to be received in the opening (reference numeral 34 in Fig. 1) of the packaging container for sterilizing the packaging container. The second position 37 is where the packaging container is released from its engagement with the electron beam emitter, i.e. the packaging container is moved relative the electron beam emitter in the vertical direction, away from a position in which the electron beam emitter is received in the opening of the packaging container. The transport of electron beam emitter and packaging container from the first position 35 to the second position 37 is a packaging container sterilization cycle, whereas the transport of the electron beam emitter from the second position 37 to the first position 35 is an electron beam dose measurement cycle. Hence, dose measurement cycles are performed in between subsequent packaging container sterilization cycles.

Fig. 2b is showing a second, general embodiment being a slight variant of the first embodiment. The first position is a similar position as the first position 35 described above, but here denoted 35'. The second position is a similar position as the second position 37 described above, but here denoted 37'. The difference between the embodiments is that the packaging sterilization cycle involves a considerably longer transport distance and/or time than the dose measurement cycle.

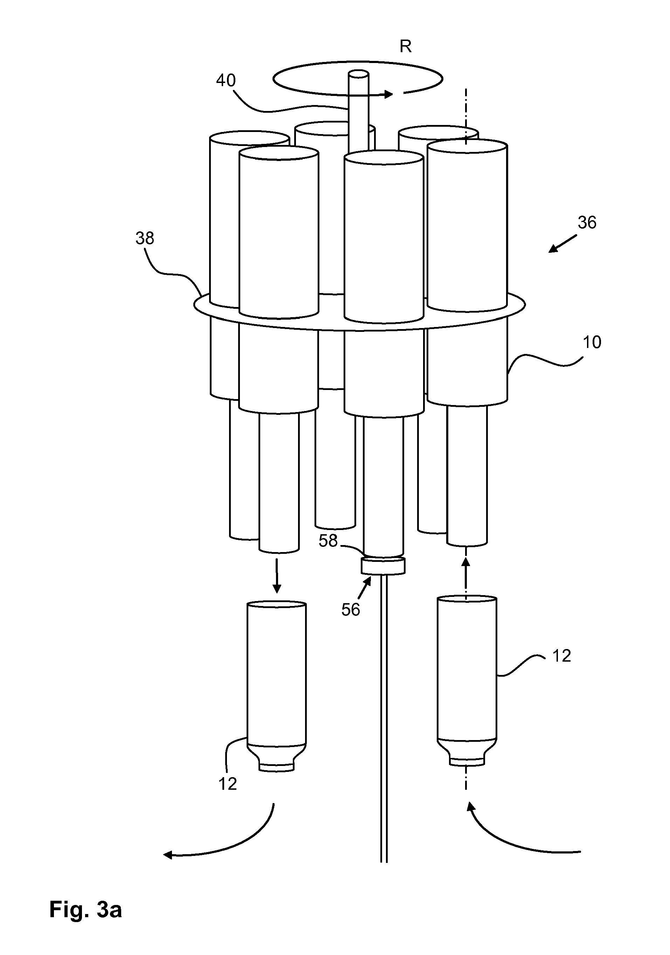

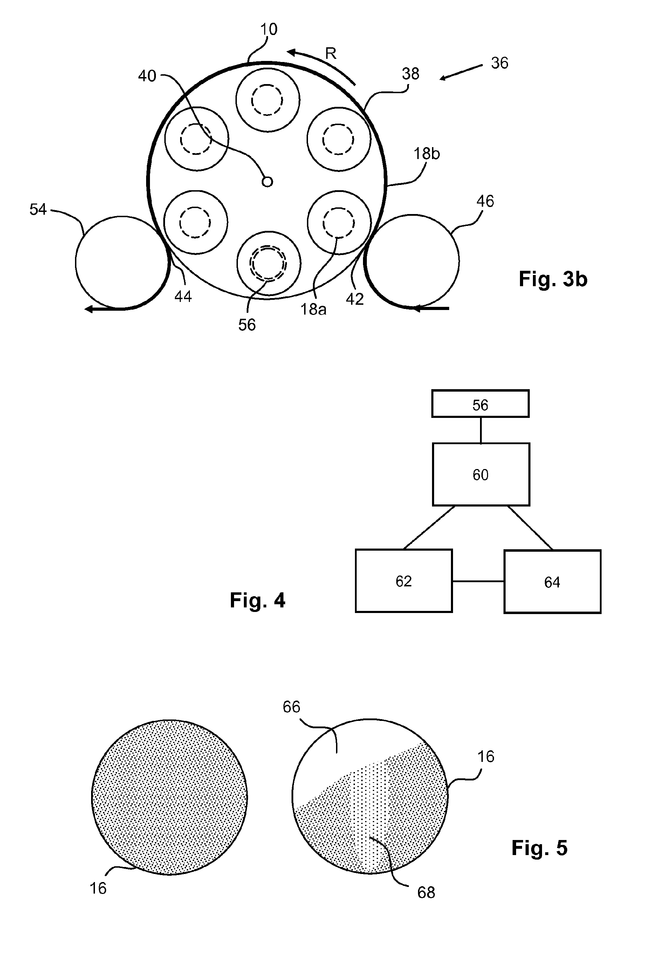

Fig. 3a and 3b show a third embodiment of the invention, being a more detailed embodiment compared to the first two. The figures show an irradiation device 36 in which several above described electron beam emitters 10 are arranged. In this embodiment six emitters 10 are provided to a rotatable carrier 38. The rotatable carrier 38 is, in this embodiment, shaped as a wheel and is rotatable round a centre shaft 40. The direction of the rotation is illustrated by the arrow R and the rotatable movement is continuous. The emitters 10 are fixed to the carrier 38 so that they are being carried along when the carrier 38 rotates. The transportation of the packaging containers is made in a direction transversely to the longitudinal extension of the emitters 10.

The irradiation device 36 further comprises packaging container conveying means, not shown, being adapted to convey the packaging container 10 from an infeed position 42 to an outfeed position 44 synchronously with the carrier revolution movement and in alignment with the electron beam emitter 10. The packaging container 12 is moved synchronously with the electron beam emitter 10 and a longitudinal centre axis of the packaging container 12 is aligned with a longitudinal centre axis of the electron beam emitter 10, see the dashed-dotted line in Fig. 3a.

The packaging container conveying means is being further adapted to vertically displace the packaging container 12 in relation to the electron beam emitter 10. In the embodiment shown the electron beam emitter 10 is arranged stationary in the carrier 38 and cannot move towards the packaging container 12. The packaging container conveying means can displace the packaging container 12 between a non-engaged position in which the packaging container 12 and the electron beam emitter 10 are not engaged with each other and a engaged position in which the packaging container 12 and the electron beam emitter 10 are fully engaged with each other. At the infeed and outfeed positions 42, 44 the packaging container 12 is positioned in the non-engaged position, i.e. not in engagement with the electron beam emitter 10. In this embodiment the infeed and outfeed positions 42, 44 are similar to the first and second positions 35, 37 of the earlier described embodiments.

At the infeed position 42 the packaging containers 12 are supplied to the irradiation device 36 from an infeed 46. Each packaging container 12 is aligned with a corresponding electron beam emitter 10. When the carrier 38 rotates, so that the electron beam emitter 10 and packaging container 12 rotates from the infeed position 42 to the outfeed position 44, the packaging container 12 conveying means displaces the packaging container 12 towards the electron beam emitter 10 so that the electron beam emitter 10 is received in the opening 34 of the packaging container 12 for sterilizing the packaging container 10. Somewhere between the infeed and outfeed positions 42, 44 the packaging container 12 has been displaced such that the packaging container 12 is fully engaged with the electron beam emitter 10. The engaged position is shown in Fig. 1.

The packaging container conveying means is not the focus of this invention and will therefore not be described in detail. It may be arranged on the carrier 38, or on the electron beam emitters 10, or a combination thereof. It may alternatively be arranged separate from the carrier 38 but able to convey the packaging containers 12 synchronous with the carrier rotation. For example it may be arranged on an irradiation shielding device enclosing the carrier 38. The packaging conveying means is provided with packaging container gripping means that is adapted to grip the packaging container 12.

When reaching the outfeed position 44 a sterilization cycle, or irradiation cycle, of the packaging container 12 is completed and the packaging container 12 has been retracted from the engaged position back to the non-engaged position. Hence, the packaging container 12 is then ready to be fed out from the irradiation device 36 by means of an outfeed 54 for further transfer to a filling device (not shown). Upon further rotation of the carrier 38, from the outfeed position 44 and back to the infeed position 42, the electron beam emitter 10 is not engaged with any packaging container 12 but is still maintained in operation, i.e. it still emitting the same electron beam. When reaching the infeed position 42 again a new sterilization cycle is commenced with a new packaging container 12 supplied from the infeed 46.

The infeed and outfeed 46, 54 are not the focus of this invention and will therefore not be described in detail. At the infeed 42 position the packaging container 12 is transferred from the infeed 46 to the carrier 38 of the irradiation device 36. The infeed 46 may be conveyor of any conventional type, for example a star wheel. At the outfeed position 44 the packaging container 12 is transferred from the carrier 38 to the outfeed 54 for further transport to a filling station. Like the infeed 46, the outfeed 54 may be a conveyor of any conventional type, for example a star wheel.

In the irradiation device 36 of the present invention the sensor device 56 is stationary arranged in the area between the outfeed position 44 and the infeed position 42, i.e. the area in which no packaging containers 12 are present in the irradiation device 36. The sensor device 56 is arranged such that the electron beam emitters 10 can pass over a sensor top surface 58, and further it is arranged so that when an electron beam emitter 10 is passed above it the electron exit window 20 is temporarily in line with the sensor device 56 for allowing the sensor device 56 to measure the dose control parameters of the electron beam 16 of said electron beam emitter 10.

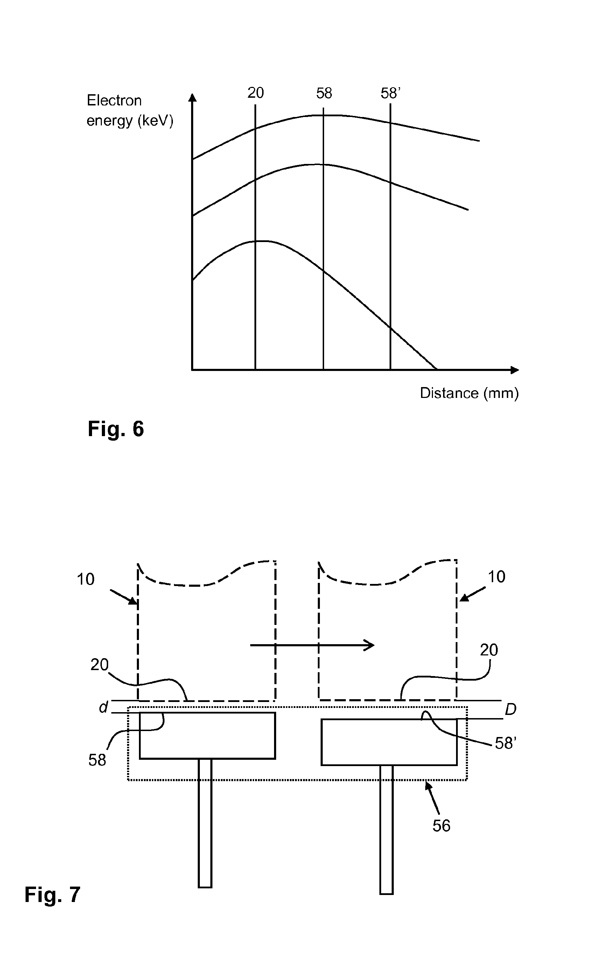

When the electron beam emitter 10 is passing the sensor device 56, planes representing the sensor surface 58 and the electron exit window 20 are at least temporarily substantially parallel with each other. Further, the longitudinal axis of the electron beam emitter 10 is aligned with the centre of the sensor surface 58, such that the sensor device 56 can collect information from the entire electron beam 16 being emitted through the plane of the electron exit window 20. A distance d in the range of approximately 0,5-15 mm is formed between the electron exit window 20 and the sensor surface 58. Preferably, a distance d (see Fig. 7) in the range of approximately 1-10 mm is formed between the electron exit window 20 and the sensor surface 58.The distance is measured between the electron exit window foil and the sensor surface 58. Generally, it is true that the smaller the gap, the better the measurement.

The irradiation device 36 has been described in a schematic way. Only parts of the irradiation device 36 being involved in the invention has been described, but it is to be understood that the irradiation device comprises also additional parts such as drive units for driving the carrier 38 and the packaging conveying means, irradiation shielding enclosing the irradiation device 36 for securing that electrons and x-rays are not spread to the environment outside of the device, and aseptic barriers being either flow barriers or physical walls, or a combination of the two, for creating and maintaining satisfactory aseptic zones.

Fig. 4 illustrates software modules being connected to a sensor device 56 of the above described embodiments. The sensor device 56 is connected to an electron beam dose processing module 60, hereinafter denoted dose processing module 60, adapted for processing the information from the sensor device 56. The dose processing module 60 is adapted to at least provide a feedback signal to a filling machine control module 62 of the filling machine if any dose control parameter is not within an acceptable, pre-set dose control parameter range. A filling machine is a machine for manufacturing the packaging containers and that sterilizes, fills and seals them. The filling machine control module 62 may for instance be a PLC (Programmable Logic Controller) module.

The feedback from the electron beam dose processing module 60 to the filling machine control module 62 is immediate and in case of an improper dose action can be taken quickly. An advantage in this regard is that the dose is measured in between every sterilization cycle, and that therefore presence of improperly sterilized packaging containers may be discovered early on. This reduces the amount of packaging containers that will have to be discarded, compared to prior art daily dosimetry.

Either a present dose control parameter is compared with a set value, for example a worst case value, or it is checked that a present dose control parameter is within an acceptable value range. This can be made in the following way. The sensor device 56 or the dose processing module 60 is of the type able to generate a 2D (two dimensional) image or 2D matrix of the dose control parameters. In the described embodiment the image comprises information about the dose rate (kGy/s) in each point and hence indirectly also information about the electron beam shape. Dose rate and electron beam shape will be described in more detail further down. To be able to evaluate the information in each point the sensor device 56 or the dose processing module 60 comprises digital image processing means or matrix processing means able to compare the generated 2D image or 2D matrix with a pre-set image or matrix for the purpose of detecting unacceptable discrepancies. Alternatively, said pre-set 2D image may be compared with two pre-set 2D images, each defining the upper and lower boundaries of acceptable values.

Further, the dose processing module 60 is connected to an electron beam emitter control module 64, hereinafter denoted emitter control module 64. The emitter control module 64 is used for controlling and adjusting for example the voltage and current being fed to the electron beam emitter 10. By connecting the dose processing module 60 to the emitter control module 64 the voltage and current may be adjusted based on input from the sensor device 56 or from stored, pre-set dose control parameters. This is useful in case it is discovered that more electrons need to be emitted to secure that correct sterilization is obtained during the available sterilization time.

The dose processing module 60 and emitter control module 64 can be further used to calibrate the electron beam emitters 10. Since all electron beam emitters 10 on the carrier 38 are measured by one and the same sensor device 56 the dose control parameters of the emitters 10 can be mutually compared. If for example parameters differ unacceptably between the electron beam emitters, the emitter control module 64 can adjust their voltage and current so that the parameters of the electron beam emitters 10 become equal or at least become within an acceptable range.

The dose processing module 60, the emitter control module 64 and the filling machine control module 62 are software modules that can either be comprised in one hardware unit or separated and comprised in two or several hardware units.

Further, the above described filling machine control module 62 is preferably connected to a device (not shown) for separating insufficiently irradiated packaging containers from sufficiently irradiated packaging containers based on the feedback signal. If there is a signal from the dose processing module 60 to the filling machine control module 62 that the packaging container 12 just being fed out was sterilized by an improperly operating emitter 10, the filling machine control module 62 sends a signal to the separation device to separate out that improperly sterilized packaging container. In that way it is secured that only properly sterilized packaging containers can proceed to filling.

The sensor device 56 may be of any suitable type. It may be comprised of a bundle of sensors, if the sensors for example are of the line type , for example as described in the international publication WO 2007/050007, for each measuring different parameters or needed to together form a 2D image measurement or a matrix measurement. The sensor device 56 could also be of the surface type, as shown in Fig. 3a, in which an entire surface 58 is able to measure the electron beam 16. The size of the sensor surface 58 is then preferably chosen so that it is larger than the area of the electron beam 16 (i.e. larger than the electron exit window 20).

The dose control parameters measured by the sensor device 56 comprise dose rate (kGy/s) and electron beam shape. Dose rate is the dose delivery per time unit or dose intensity, and the electron beam shape is the intensity distribution. By measuring and controlling both it is possible to detect failures of the electron beam emitters, secure absorbed dose to the packaging containers and operate the electron emitters with the lowest possible load.

In order for a packaging container to for example reach a sterilization level referred to as "commercially sterile" an absorbed dose of approximately 25kGy (kilogray) is needed in every point of the interior surface of the packaging container. An electron beam emitter that is able to deliver a beam in which the amount, distribution and range of the electrons perfectly suits the packaging container surface profile is of course ideal in order to keep the sterilization time short and to keep a low load or stress on the electron beam emitter. Electron beam load or stress refers to the amount of emitted electrons in each point per time unit, i.e. the intensity; the dose rate (kGy/s). Ideally, the amount of emitted electrons should not need to be "oversized", but just as big as needed in order to obtain the desired dose in the packaging container. If an oversized amount is needed, due to for example improper intensity distribution, the electron beam emitter needs to be run with higher current and voltage to maintain the same sterilization time. In general, this negatively affects the lifetime. The higher the current and voltage needed to the drive the electron beam emitter, the shorter the lifetime will be.

If the electron beam emitter 10 is not delivering an ideal dose distribution it will take longer time, or require more from the electron beam emitter in terms of amount of emitted electrons, to obtain the dose all over the interior surface of the packaging container 12. If the electron beam distribution or intensity is really bad, having spots or areas where no or just a small amount of electrons reach the target, i.e. the packaging container surface, it may even be impossible to reach the dose in all areas of the packaging container. If for example a part of the electron beam for some reason is deflected inside the electron beam emitter 10, with the result that some electrons do not reach through the electron exit window 20 but are instead hitting the inside surface of the emitter or getting stuck in the electron exit window, some areas of the packaging container 12 may not receive any dose. It may also be that only some electrons reach through the electron exit window 20, which would substantially increase the time until a satisfactory dose has been reached.

The above may be illustrated by Fig. 5. The left picture illustrates an exemplary, schematic, exemplary ideal distribution of an electron beam 16 (shown in 2D representation). Every electron is shown as a dot. The distribution is in this case even and the intensity, i.e. the dose rate, can be regarded as high. The right picture illustrates a corresponding exemplary electron beam 16 of a malfunctioning electron beam emitter. The beam has an irregular shape and an uneven distribution. Over an area 66 there are no electrons reaching the target, i.e. reaching the packaging container surface, and over another area 68 the intensity or amount of electrons is less than that of electron beam shown on the left side. A packaging container being irradiated with such electron beam emitter will not obtain the required dose, and will need to be discarded.

It should be noted that an ideal electron beam intensity and distribution may not always look like the one shown in Fig. 5. In fact, in some applications, it is instead desired to have an intensity and distribution not entirely even, but rotational symmetric and with an electron intensity and distribution not being the same along the radius of the window.

A dose control parameter measurement according to the present invention will necessarily not detect electric arcs that may be generated in the electron beam emitter. An arc may occur during a time period of less than a second, and cannot be detected by the sensor device unless occurring in the moment the electron beam emitter is passing the sensor device. However, if occurring during sterilisation of a packaging container, the result may be an unsterile packaging container. Therefore, it is advised to combine the dose control parameter measurement of the present invention with state of the art measurements of voltage and current in the electron beam emitter. The current over the filament is measured (comparison of current fed to the filament and current leaving the filament) and the voltage, i.e. the electric potential, between the electron exit window and the filament is measured. An arc would result in a short, temporary, detectable fluctuation of the voltage and/or current. The measured values of current and voltage are processed by the emitter control module 64 and feedback is sent to the filling machine control module 62.

A further advantage with the invention, if combined with the above mentioned current and voltage measurement, is that it can be utilized for detecting sensor device failure. If the voltage and current monitoring of the electron beam emitters show acceptable values but the feedback signal from the dose processing device 60 suddenly shows discrepancies for all the electron beam emitters, it is likely that the sensor device 56 itself operates faulty. Hence, it can be used for detecting sensor device 56 failure.

A further advantage with the invention is that it can be used to predict when it's time to replace the electron beam emitters. The images or matrices can be analysed more deeply to find single points in which there is a discrepancy, indicating deposit or dirt on the electron exit window or filament wear. Further, the amount of emitted electrons in relation to the current and voltage supplied to the emitter may be monitored over time. This is to be able to detect any slow decrease in the amount of electrons emitted although supplying the same current and voltage. Such may for example be an indication of filament wear. The information can be used to calculate an approximate expected lifetime.

In a fourth embodiment of the present invention the sensor device 56 comprises a first sensor surface 58 and a second sensor surface 58'. The sensor device 56 is shown in Fig. 7 together with dashed-lined boxes representing a passing electron beam emitter 10. The sensor surfaces 58 are being arranged on two different levels in relation to the electron exit window 20 of the electron beam emitter 10. The two surfaces 58, 58' have different distances to the electron exit window of the electron beam emitter. A larger distance D is formed between the electron exit window 20 and the second sensor surface 58', when in line with each other, than the distance d formed between the electron exit window 20 and the first sensor surface 58, when in line with each other.

The sensor device 56 can be made up by two physically separated sensor units having one sensor surface each, as shown in Fig. 7, or the sensor device 56 can be one sensor unit having two sensor surfaces side by side.

The distance between the first sensor surface 58 and the second surface 58' is in the range of 5-20 mm. Hence, the larger distance D is the sum of the smaller distance d plus a distance in the range of 5-20 mm.

Generally, the distance between the two sensor surfaces 58, 58' needs to be matched with the acceleration voltage. In case of a relatively higher acceleration voltage, for instance 150 kV, the electrons will reach farther than in the case of a relatively lower acceleration voltage, for instance 95 kV. For the higher acceleration voltage the distance between the sensor surfaces 58, 58' may be made longer than in the case of the lower acceleration voltage. For the higher voltage a distance of 5-20 mm may be chosen, whereas in the case of the lower acceleration voltage a distance in the order of 5-10 mm is better.

By arranging the sensor surfaces 58, 58'on two different levels in relation to the electron exit window 20, the electron energy distribution may be assessed, which is useful when assessing the dose distribution in a packaging container. Fig. 6 shows three graphs being different general electron energy distribution curves A-C. The y axis shows the electron energy level (keV) and the x axis shows the electron travelling distance (mm). Curve A shows the typical energy distribution for a case in which the initial electron energy is low. A relatively large amount of energy will be absorbed in the electron exit window 20. After passing the electron exit window 20 the electron energy will quickly decrease, which leads to a steep inclination of the energy distribution curve between the first sensor surface 58 and the second sensor surface 58'. In a case where the initial electron energy is instead high, the curve will typically look like curve C. In this case relatively little energy is absorbed in the electron exit window 20, and the curve inclination between the first sensor surface 58 and the second sensor surface 58' is flat. Curve B shows the energy distribution of an intermediate initial electron energy, and the inclination between the first and second sensor surface 58, 58' is not as steep as in curve A, but not as flat as in curve C. By measuring the energy of the electrons with both sensor surfaces 58, 58' the inclination of the actual energy distribution curve can be assessed. For a properly working emitter 10 the inclination angle will not change over time. However, if it is changing, gradually or abruptly, it can be concluded that something has happened, for example there can be dirt or deposit building up on the electron exit window, or there can be a deviation in the acceleration voltage.

In the above described embodiment the sensor device 56 comprises a first and a second sensor surface 58, 58' being arranged on two different levels in relation to the electron exit window 20 of the electron beam emitter 10. In an alternative embodiment the sensor device 56 comprises a plurality of sensor surfaces arranged on different levels in relation to the electron exit window 20. For example, there may be three sensor surfaces, on three different levels in relation to the electron exit window. There may be more sensor surfaces than three. A larger number of sensor surfaces can give a more exact assessment of the electron energy distribution than a smaller number of sensor surfaces.

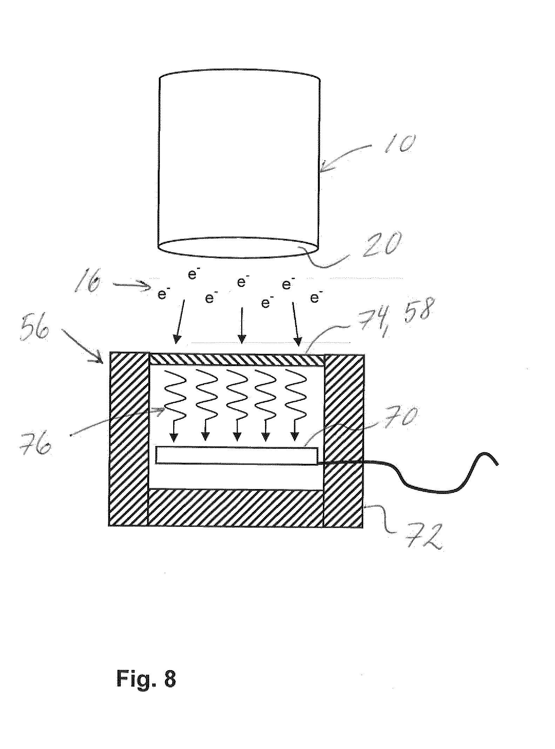

Many different types of sensor devices may be used in the above described embodiments. With reference to Fig. 8 an exemplary sensor device 56 will be described. The sensor device 56 comprises at least one x-ray imaging sensor 70 encapsulated in a box 72 having a lid 74. The lid 74 functions as one of the walls of the box, and closes off the box 72. The lid 74 is to be regarded as the previous described sensor surface 58, and is positioned at the top of the box 72 facing the electron exit window 20 of the electron beam emitter 10. The distance between the electron exit window 20 and the sensor device 56 is exaggerated in the figure. In an exemplary application the distance is approximately 0,5-15 mm. The area of the lid 74 is preferably of the same size or larger than the area of electron exit window 20. The lid 74 is made of a metal plate or metal film, for example made of a plate or film of stainless steel or copper.

When the lid 74 is hit by electrons e⁻ of the electron beam 16 coming from the electron beam emitter 10, x-rays 76 are generated and partly emitted inside the box 72. The x-rays 76 are detected by the at least one x-ray imaging sensor 70. The intensity of x-rays detected by the x-ray sensor 70 is proportional to the electron energy deposited in the lid 74 per unit time, assuming that the incident electron energy distribution is constant. Hence, the information from the x-ray imaging sensor 70 can be converted to show an image of for example the dose rate and electron beam shape.

The x-ray imaging sensor 70 is preferably positioned very close to the plate 74. Preferably the distance between them is less than 1 mm. The x-rays are emitted in all directions and in order to obtain a measurement with maintained correspondence between the hitting electrons and the thereby generated x-rays it is necessary to capture the x-rays as close as possible to their plate exit point (into the box 72). Otherwise an x-ray may be measured for example in the middle of the x-ray imaging sensor however originating from for example the left side of the plate 70. It should be noted that the distance between the x-ray imaging sensor 70 and plate 74 is exaggerated in Fig. 8 in order to show the x-rays 76. Further, for simplicity, the x-rays 76 are shown as being directed in one direction only.

The x-ray imaging sensor 70 can be of many types. An exemplary x-ray imaging sensor 70 comprises an x-ray scintillator connected to an array of photomultipliers or photodiodes. The scintillator comprises a material that, when exposed to ionizing radiation such as x-rays, emits luminescent light, i.e. re-emits the absorbed energy in the form of light. The array of photomultipliers or photodiodes detect the light and converts is to an electric signal that is used for creating the image of the dose rate and electron beam shape. For this purpose the sensor device 56 is connected to processing means for processing the information from the x-ray imaging sensor 70 and generate an image of the dose control parameter of the electron beam 16. Different scintillator materials react on different energies of the electrons. This may be utilized in a sensor device 56 with several sensor surfaces on different levels, as described with reference to the fourth embodiment.

Other exemplary types of x-ray imaging sensors 70 that may be used are CCD sensors (CCD = charge-coupled device) or CMOS sensors (CMOS = complementary metal-oxide-semiconductor).

The thickness of the metal plate or film of the lid 74 is dependent on the electron energy and the lid material used in each application. In general the thickness of the plate or film of the lid 74 should be large enough to prevent electrons e⁻ of the electron beam 16 to pass through it, but still as thin as possible such that the x-ray imaging sensor array 70 may be positioned as close as possible to the electron exit window 20 of the electron beam emitter 10.

The box 72 has walls which function are to shield off and protect the x-ray imaging sensor array 70 from the surrounding environment. The box walls are made of metal, for example stainless steel. The thickness of the walls is large enough to shield off unwanted electrons and x-rays from outside.

The at least one x-ray imaging sensor can be of the linear type or the surface type. The linear type measures along a line, and to create an image of the entire electron beam, several measurements at different electron beam emitter positions need to be sampled. In case of a surface type of x-ray imaging sensor the entire electron beam can be measured in one instance. The plate 74 may be made smaller in size in case of a linear type of x-ray imaging sensor.

The invention also comprises a method, which to a large extent has already been described in relation to the description of the irradiation device 36. In the following the method will be briefly described. The method comprises the step of providing at least one electron beam emitter 10 having an electron exit window 20, and at least one sensor device 56 for measuring dose control parameters of the electron beam 16. It further comprises providing a first position 35 and a second position 37. The method further comprises moving said electron beam emitter from first position 35 to the second position 37, and from the second position 37 to the first position35, and at least temporarily engaging said electron beam emitter with a packaging container 12 for irradiating said packaging container 12, between the first position 35 and the second position 37, and at least temporarily positioning the electron exit window 20 substantially in line with the sensor device 56, between the second position 37 and the first position 35, for allowing the sensor device 56 to measure the dose control parameters of the electron beam 16 of said electron beam emitter 10. Further, it comprises processing the information from the sensor device in a dose processing module, and at least sending a feedback signal to a filling machine control module if any dose control parameter is not within an acceptable, pre-set dose control parameter range. The method further comprises the step of generating a 2D image or 2D matrix of the dose control parameters in the sensor device or the dose processing module, and comparing, using a digital image processing means or matrix processing means, the generated 2D image or 2D matrix with a pre-set 2D image or matrix for the purpose of detecting unacceptable discrepancies.

Although the present invention has been described with respect to a presently preferred embodiment, it is to be understood that various modifications and changes may be made without departing from the object and scope of the invention as defined in the appended claims.

The exemplary carrier in the third embodiment is a circular wheel but it should of course be understood that the carrier could alternatively be an endless conveyor of any shape. Further, the carrier is rotated with a continuous movement. Alternatively, the carrier may instead rotate intermittently. The type and/or position of the sensor device need to be chosen accordingly. If the electron emitter is paused aligned with the sensor device, the sensor device is preferably of the surface type of sensor, i.e. a sensor device being able to measure the entire electron beam in one instant. If a line type of sensor is used one of the electron beam emitter or the sensor device needs to move in order to cover the entire electron beam. Preferably, the sensor device is then placed in a position slightly to the left of the sensor device position shown in Fig. 3a, to be able to measure the electron beam before the electron beam emitter is intermittently paused.

In the disclosed emitter 10 the accelerating voltage is in the order of 95 kV. However, the invention should not be limited to an acceleration voltage in that order. It may be any voltage within the interval 50-300kV depending on the application, for example an acceleration voltage of 150kV is common in the PET bottling industry. Depending on the acceleration voltage a suitable sensor device 56 is chosen.

In the described embodiments the sensor device 56 is stationary positioned, whilst the electron beam emitter is adapted to be moved past the sensor device 56 so that the measurement can be performed. An alternative is that the sensor device 56 is also made movable. The sensor device 56 may be moved synchronously, and in alignment, with the electron beam emitter during at least a portion of the electron beam dose measurement cycle. Such would increase the time available for measurement.

Further, in the embodiments described the electron beam emitter and the sensor device are stationary in the vertical direction, i.e. none of them is adapted to be movable in the vertical direction, i.e. in relation to each other. In alternative embodiments at least one of the sensor device 56 and the electron beam emitter is movable in relation to each other in the vertical direction to provide them in a position suitable for dose parameter measurement. Either one of them is movable in relation to the other, or both are movable a distance each. A relative movement in the vertical direction is necessary if the design of the irradiation device, for some reason, does not otherwise provide for a gap between the electron exit window 20 and the sensor surface 58 in the range of approximately 1-10 mm.

The different embodiments described above focus on different aspects and different features of the invention, and it should be understood that the embodiments may be combined in any way.

## Claims

1. Sensor device (56) for measuring at least one dose control parameter of an electron beam (16) emitted from an electron exit window (20) of an electron beam emitter (10), said sensor device (56) comprising
a plate (74) adapted to generate x-rays (76) when hit by electrons (e⁻) of said electron beam (16), and
at least one x-ray imaging sensor (70) adapted to detect the generated x-rays (76).

2. Sensor device (56) according to claim 1, wherein said dose control parameter is dose rate (kGy/s).

3. Sensor device (56) according to claim 1 or 2, wherein it is connected to processing means for processing the information from the at least one x-ray imaging sensor (70) and generate an image of the dose control parameter of the electron beam (16).

4. Sensor device (56) according to any of the preceding claims, wherein the at least one x-ray imaging sensor (70) comprises a scintillator connected to an array of photomultipliers or photodiodes.

5. Sensor device (56) according to any of the preceding claims, wherein the at least one x-ray imaging sensor (70) is a CCD sensor or a CMOS sensor.

6. Sensor device (56) according to any of the preceding claims, wherein the plate (74) is made of a metallic material.

7. Sensor device (56) according to any of the preceding claims, wherein the electron exit window (20) of the electron beam emitter (10) is adapted to at least temporarily face said plate (74), and that the plate (74) is arranged as a barrier between the electron exit window (20) and the at least one x-ray imaging sensor (70), such that the electrons hit the plate (74).

8. Sensor device (56) according to any of the preceding claims, wherein the at least one x-ray imaging sensor (70) is encapsulated in a box (72), said box having said plate (74) as a lid.

9. Sensor device (56) according to any of the preceding claims, wherein the area of the plate (74) is large enough to catch the entire cross section of the electron beam.

10. Sensor device according to any of the preceding claims, wherein the thickness of the plate (74) is large enough to prevent electrons (e⁻) of the electron beam (16) to pass through it.

11. Method for measuring at least one dose control parameter of an electron beam (16) of an electron beam emitter (10), said method comprising forcing the electrons (e⁻) of the electron beam (16) to hit a plate (74), which plate (74) is adapted to generate x-rays (76) when hit by the electrons (e⁻), and detecting the generated x-rays (76) by at least one x-ray imaging sensor (70).
